# EUROPEAN PATENT SPECIFICATION

(11) **EP 1 342 291 B1**
(45) Date of publication and mention of the grant of the patent: **13.08.2008**
(21) Application number: 01992426.5
(22) Date of filing: 24.10.2001
(51) Int. Cl.: H01Q 3/02, H01Q 3/26, H04L 12/28

(54) **DIRECTION-AGILE ANTENNA SYSTEM FOR WIRELESS COMMUNICATIONS**
RICHTUNGSAGILES ANTENNENSYSTEM FÜR DIE DRAHTLOSE KOMMUNIKATION
SYSTEME D'ANTENNE OMNIDIRECTIONNELLE AGILE POUR COMMUNICATIONS SANS FIL

(30) Priority: 10.11.2000 US 710724; 10.11.2000 US 709758; 10.11.2000 US 709752
(43) Date of publication of application: 10.09.2003
(73) Proprietor: AM Group Corporation, Irvine, CA 92618 (US)
(72) Inventor: ABRAMOV, Oleg Y., St. Petersburg 198330 (RU); KASHKAROV, Alexander G., St. Petersburg 190031 (RU); KIRDIN, Alexander N., St. Petersburg (RU)
(74) Representative: W.P. Thompson & Co.
(86) International application number: PCT/US2001/050651
(87) International publication number: WO 2002/039543

(56) References cited:
- EP-A- 0 897 230
- GB-A- 2 327 566
- US-A- 5 243 354
- US-A- 5 697 066
- US-A- 5 969 689
- US-A- 6 100 843

## Description

### BACKGROUND OF THE INVENTION

### 1. Field of the Invention

The present invention relates to an antenna system, and more particularly, to an antenna system for communications in a wireless network.

### 2. Background Art

Omni-directional antennas have been implemented in various types of mobile communications devices in a conventional wireless network, for example, a digital mobile telephone network. In addition to voice communications, attempts have been made to provide high speed data communications between various types of apparatus including, for example, desktop computers, laptop computers, servers, peripherals and power management hubs in a wireless network. Compared to voice communications, data communications typically require a large bandwidth, a very low bit error rate, and ability to communicate with multiple devices at different physical locations.

To ensure high speed transmission of data at a very low bit error rate, a relatively high signal to noise ratio (SNR) at radio frequency (RF) is required to carry the data transmitted and received by the various apparatus in a conventional wireless network. Because of the spread of RF power over all directions in space by a typical omni-directional antenna in a conventional mobile wireless device, such as a mobile telephone, communications with such devices may occur only over relatively short distances. Furthermore, in a typical mobile wireless network, the locations of at least some of the communications apparatus are not fixed with respect to each other, thereby further complicating the transmission and reception of data by different apparatus within the network.

A cellular communications system is known from US-A-5697066 which uses packet signaling between a base station with a variable antenna system and remote stations. The system uses pilot tones sent by the remote stations to the base station at the start of each data transfer period in which signaling will occur in either direction. The base station uses the pilot tone to configure the directional antenna for communication with the remote station during that data transfer period, the pilot tone signals being initiated by polling signals and polling acknowledgment signals. There is, however, little description in this document of the actual antenna structure and how it may operate to provide direction agility.

US-A-6100843 discloses an antenna apparatus which seeks to increase capacity in a cellular communication system. It operates in conjunction with a mobile subscriber unit and provides a plurality of antenna elements, each coupled to a respective programmable phase shifter. The phase of each antenna element is programmed for optimum reception during, for example, an idle mode which receives a pilot signal. The antenna array creates a beamformer for signals to be transmitted from the mobile subscriber unit, and a directional receiving array to detect and receive signals transmitted from the base station. The apparatus described in this document comprises a plurality of simple dipole antenna elements dispersed on a common unitary plane and respective phase shifters.

EP-A-897 230 discloses a satellite-based system using a wireless LAN arrangement and having a planar array of patch elements, each controlled by two phase-shifters for controlling an antenna beam in two directions. All of the elements in this system are disposed on a single planar surface suitable for communicating only with a satellite and are not suitable for direct communication with another station directly.

GB-A-2 327 566 is concerned with a method of installing a fixed wireless access subscriber antenna which employs an antenna for receiving signals from a radio communications base station, support means to orient the antenna in elevation and azimuth and control and analysis means to provide data relating to the signal strength received from the antenna in elevation and azimuth. The apparatus includes an array of individually moveable antennas, each having azimuth and elevation control to physically point toward a base station. Directional control is therefore essentially mechanical in nature.

US-A-5 243 354 is directed to a radar scanning antenna using switches to power sequentially a plurality of planar arrays to thereby scan 360 degrees from the antenna. The system uses a microstrip electronic scan antenna array comprising a hollow elongate octagonal-shaped housing formed by four quadrantially-disposed microstrip patch antenna arrays and four filler panels extending between the patch arrays. Three, independentlyswitchable microstrip Y-junction circulators are tandem inter-connected in a double-ended wye configuration on a common dielectric substrate forming an octagonal end cover for the housing. Each of the three circulators acts as a single pole-double throw switch and the sequence of energisation of the four microstrip patch antenna arrays is determined by controlling the sequence and direction of circulator coupling action of the three circulators. This system is not concerned with the use of controlled steering in response to a direction selection signal for efficient communications in a wireless network.

It is desirable that high speed data links be established in a mobile wireless network with a high degree of data integrity while obviating the need for high power RF transmissions by mobile communications apparatus. Furthermore, it is desirable that high speed data links be maintained between different mobile communications apparatus in a wireless network even though the spatial locations of the apparatus may not be fixed with respect to each other.

### SUMMARY OF THE INVENTION

The present invention provides a direction-agile antenna system for communication in a wireless network, comprising:
an antenna capable of transmitting an electromagnetic signal in a direction having an antenna gain; and
a controller connected to the antenna, the controller being capable of generating a direction-selection signal to steer the electromagnetic signal to a selected direction corresponding to a high gain position in response to detecting an expected signal transmitted within the network;
wherein the antenna comprises a plurality of antenna elements capable of electronically steering the electromagnetic signal to a selected direction in response to the direction-selection signal, and
wherein the antenna elements are arranged in a plurality of arrays disposed on different planes.

Advantageously, the direction-agile antenna system in an embodiment according to the present invention is capable of transmitting electromagnetic signals carrying digital data to an apparatus for which a transmission is intended with concentrated power density, thereby allowing a high rate of data transmission with a high degree of data integrity over a relatively long distance, while obviating the need for a high transmitted radio frequency (RF) power level. Furthermore, the direction-agile antenna system in an embodiment according to the present invention allows different apparatus to maintain instantaneous communications within a mobile wireless network even though the spatial positions of the apparatus may not be fixed with respect to each other.

The invention is described further hereinafter, by way of example only, with reference to the accompanying drawings, in which:-
FIG. 1 is a partially cutaway perspective view of a direction-agile antenna system with mechanical beam steering not in accordance with the present invention;
FIG. 2A is a side-sectional view of the direction-agile antenna system of FIG. 1 obtained along sectional line 2a-2a;
FIG. 2B is another side-sectional view of the direction-agile antenna system of FIG. 1 obtained along sectional line 2b-2b;
FIG. 3 is a schematic block diagram showing an embodiment of a controller with digital signal processing which can be used in a direction-agile antenna system in accordance with the invention;
FIG. 4 is a schematic block diagram showing an embodiment of an antenna control unit with a direction-agile antenna system with mechanical beam steering;
FIG. 5 is a schematic representation of a mobile wireless network having a plurality of laptop computers equipped with direction-agile antenna systems in an embodiment according to the present invention;
FIG. 6 shows a partially cutaway perspective view of a direction-agile antenna system with electronic beam steering in accordance with an embodiment of the present invention;
FIG. 7A is a side-sectional view of the direction-agile antenna system of FIG. 6 obtained along sectional line 7a-7a of FIG. 6;
FIG. 7B is another side-sectional view of the direction-agile antenna system of FIG. 6 obtained along sectional line 7b-7b of FIG. 6;
FIG. 8 is a partially cutaway perspective view of a direction-agile antenna system with electronic beam steering in accordance with another embodiment of the present invention;
FIG. 9 is a flow chart illustrating a method of tracking a signal in a wireless network in an embodiment according to the present invention; and
FIG. 10 is a flow chart illustrating a method of tracking a signal in a wireless network in another embodiment according to the present invention.

### DETAILED DESCRIPTION

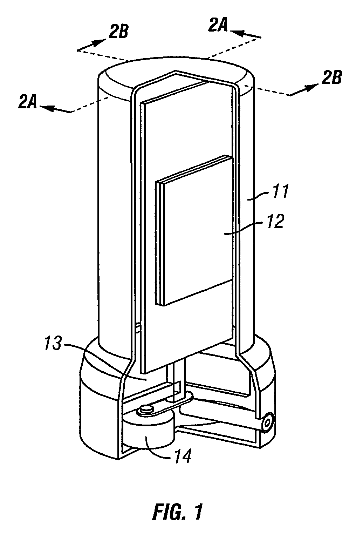

FIG. 1 shows a partially cutaway perspective view of a direction-agile antenna system for use in a mobile wireless communications network which does not incorporate the present invention. This antenna system includes a mechanically steered antenna 12 enclosed within a dielectric cover 11. A motor driver 13 is connected to a motor 14 which is capable of rotating the antenna 12 to a desired direction. The motor 14 is capable of rotating the antenna 12 through 360° in azimuth to scan the antenna beam in a horizontal plane. In other such systems, the motor driver 12 is capable of driving the antenna 12 to scan in both azimuth and elevation.

The antenna 12 can be a planar microstrip antenna which comprises a plurality of microstrip antenna elements capable of transmitting and receiving electromagnetic signals in a direction having a positive antenna gain. Other types of directional antennas with positive antenna gains in desired directions are also possible in this type of system, for example, parabolic reflector antennas, cassegrain antennas, waveguide slot array antennas and phased array antennas capable of producing directional electromagnetic beam patterns. Various types of conventional antennas can be designed to produce desired beam patterns in a conventional manner.

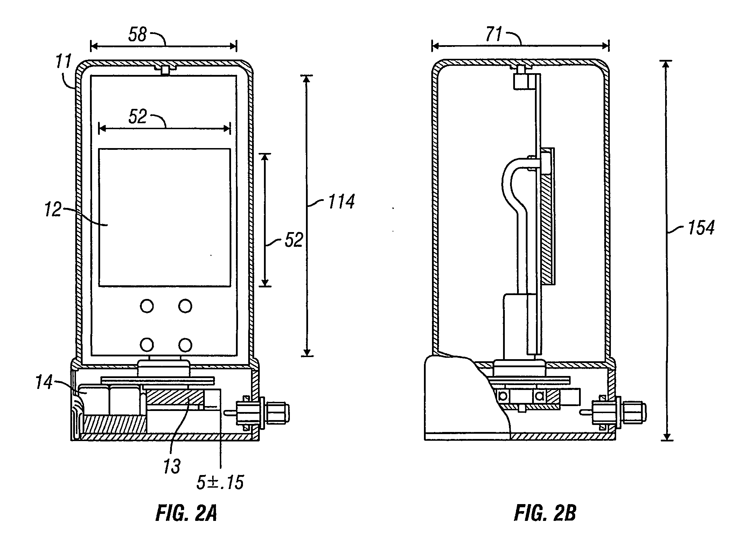

FIGS. 2A and 2B show side-sectional views of the direction-agile antenna system with a mechanically steered antenna of FIG. 1 obtained along sectional lines 2a-2a and 2b-2b, respectively.

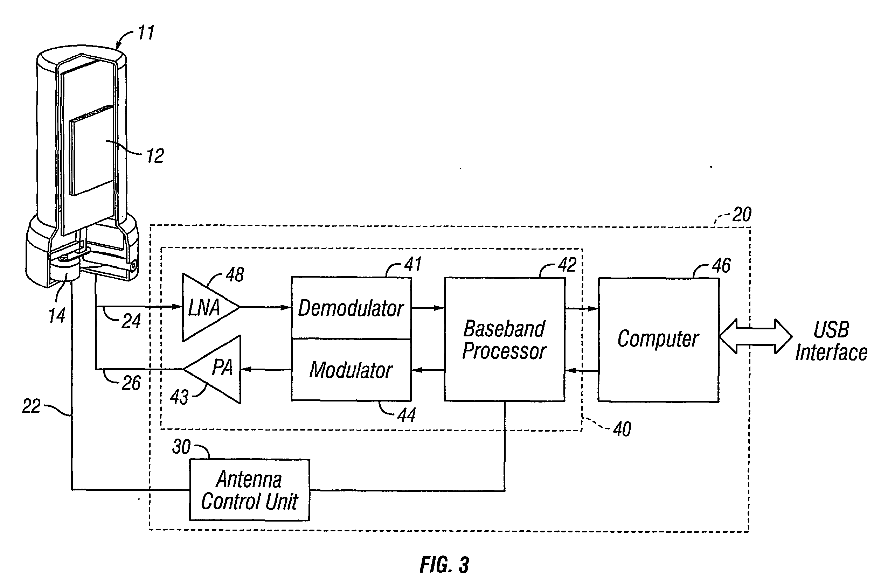

FIG. 3 shows a block diagram of an embodiment of a controller for selecting the direction of electromagnetic transmission and reception by the antenna in the direction-agile antenna system. The controller 20 is capable of generating a direction-selection signal to steer the electromagnetic signal transmitted by the antenna 12 to a selected direction corresponding to a high gain position, in response to detecting an expected signal transmitted within the wireless communications network. The controller 20 has a drive signal output 22 connected to a motor 14 in a mechanically steered direction-agile antenna system. Furthermore, the controller 20 has a radio frequency (RF) input 24 and an RF output 26 connected to the antenna 12.

The controller 20 comprises a transceiver 40 and an antenna control unit 30. The transceiver 40, which is connected to the antenna 12 through the RF. input 24 and the RF output 26, is capable of generating an antenna gain signal in response to detecting an expected signal transmitted by another wireless device within the wireless communications network. The antenna gain signal generated by the transceiver 40 is transmitted to the antenna control unit 30, which generates a direction-selection signal to steer the antenna 12 to a desired direction in response to the antenna gain signal.

The transceiver 40 comprises a demodulator 41 connected to the RF input 24 to convert the RF signal to a baseband signal. The demodulator 41 converts the received RF signal to the baseband signal in multiple stages in a manner apparent to a person skilled in the art. For example, the RF signal may be first converted to an intermediate frequency (IF) signal and then demodulated into a baseband signal. To reduce the effect of noise spectrum in the received RF signal, a low noise amplifier (LNA) 48 is connected between the antenna 12 and the demodulator 41.

The transceiver 40 further comprises a baseband processor 42 connected to the demodulator 41 to generate the antenna gain signal which is transmitted to the antenna control unit 30. The baseband processor 42 is capable of processing data transmitted and received by the direction-agile antenna system in addition to generating the antenna gain signal for steering the antenna beam to a desired direction to communicate with another wireless device within the wireless network. In the illustrated system, the data transmitted and received by the directional-agile antenna system are transferred between the baseband processor 42 and a computer 46, which is capable of further transferring the data to peripherals through an interface, for example, a universal serial bus (USB) interface.

The transceiver 40 further comprises a modulator 44 connected to the baseband processor 42, which generates baseband signals carrying the data to be transmitted by the direction-agile antenna system to another wireless device within the wireless network. The modulator 44 modulates the baseband signals generated by the baseband processor 42 to generate RF signals. The RF signals generated by the modulator 44 are amplified by a power amplifier 43, which is connected between the modulator 44 and the antenna 12. The demodulation of RF signals into baseband signals and the modulation of baseband signals into RF signals can be performed in a conventional manner apparent to a person skilled in the art.

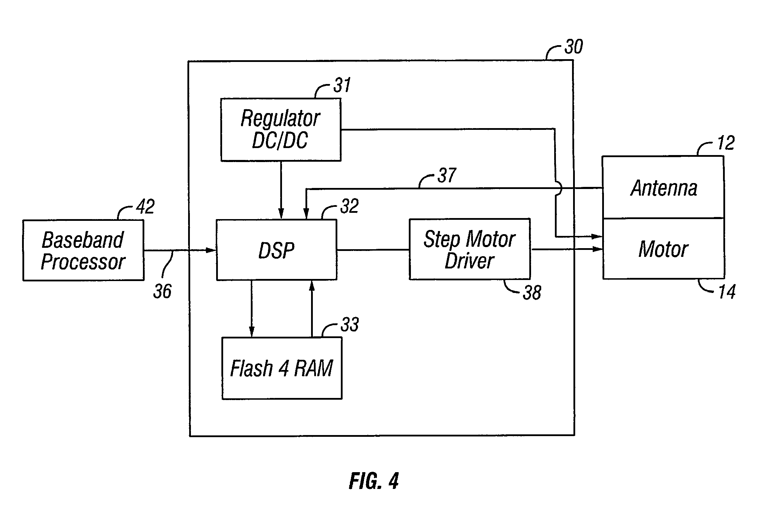

Fig. 4 shows a block diagram of an antenna control unit which is applicable to a direction-agile antenna system not in accordance with the present invention, having mechanically steered antenna. The antenna control unit 30 comprises a digital signal processor (DSP) 32 which is connected to receive the antenna gain signal from the baseband processor 42 via signal path 36. The digital signal processor 32 is also connected to flash and random access memory (RAM) 33. The memory 33 stores application software which embeds the algorithm for generating a direction-selection signal for the antenna. The digital signal processor 32 generates the direction-selection signal based upon the instant gain of the antenna in the desired direction, the instant angle of the antenna and the parameters of the driving motor.

When the direction-agile antenna is mechanically steered by a step motor, the antenna control unit 30 further comprises a step motor driver 38 connected between the digital signal processor 32 and the motor 14 for rotating the antenna 12. The motor 14 is capable of rotating the antenna 12 to the selected direction in response to the direction-selection signal received by the step motor driver 38. In a further embodiment, a DC/DC regulator 31 is connected to the digital signal processor 32 and the motor 14. A feedback path 37 is provided between the antenna 12 and the digital signal processor 32 to indicate the current angular position of the antenna to the processor 32, thereby allowing the processor 32 to track the movement of the antenna with better accuracy.

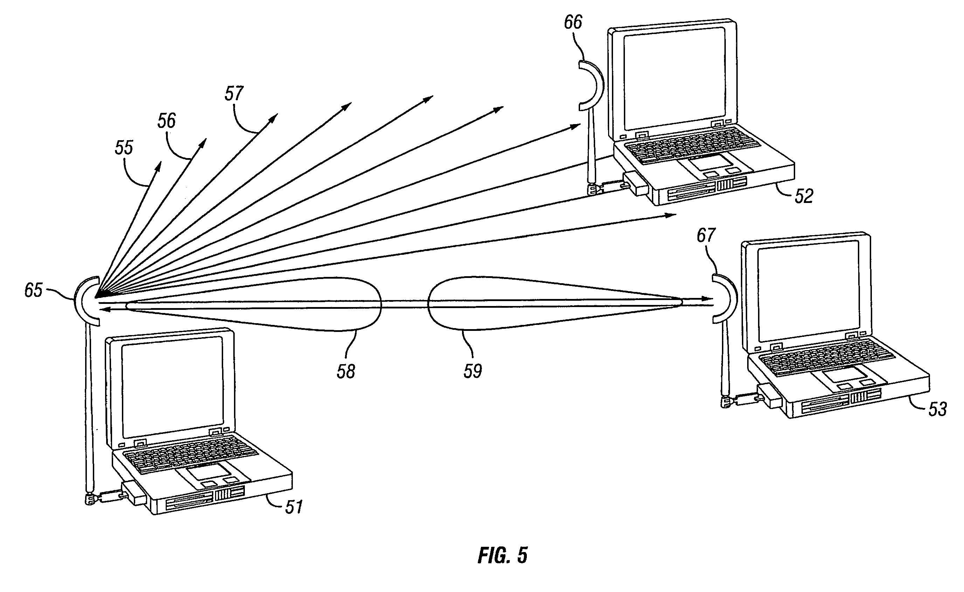

FIG. 5 illustrates a mobile wireless network which includes a plurality of mobile wireless devices using direction-agile antennas. In FIG. 5, three laptop computers 51, 52 and 53 are equipped with direction-agile antennas 65, 66 and 67, respectively. One of the wireless communication devices which seeks to initiate a wireless data link is called a master device, whereas another wireless communication device which responds to the request to establish the data link is called a slave device. For example, the mobile wireless communication device 51 may be a master device which seeks to establish a wireless data link with either the wireless communication device 52 or the wireless communication device 53.

The direction-agile antenna 65 of the master device 51 initially scans through successive angular positions such as those indicated by arrows 55, 56 and 57 until it arrives at a direction corresponding to the high gain position for a slave device with which a wireless data link is intended to be established. During the scanning of the direction-agile antenna 65, polling requests are transmitted repeatedly until the master device 51 receives a response to the polling request by one of the slave devices. If the slave device 52 is not the one intended to establish a wireless data link with the master device 51, for example, then the direction-agile antenna 66 of the slave device 52 does not transmit a response to the polling request.

On the other hand, if the slave device 53 is the one intended to establish a wireless data link with the master device 51, then the direction-agile antenna 67 of the slave device 53 is directed toward the direction-agile antenna 65 of the master device 51, and a response is transmitted from the slave device 53 to the master device 51 to accomplish a handshake signifying the establishment of a wireless data link between the master device 51 and the slave device 53.

When the response to the polling request is detected by the master device 51, the direction-agile antenna 65 of the master device 51 is directed toward the slave device 53, with an antenna beam pattern illustrated by the main lobe 58 of electromagnetic radiation generated by the antenna 65. In a similar manner, the direction-agile antenna 67 of the slave device 53 is directed toward the master 51, with an antenna beam pattern illustrated by the main lobe 59 of electromagnetic radiation generated by the antenna 67.

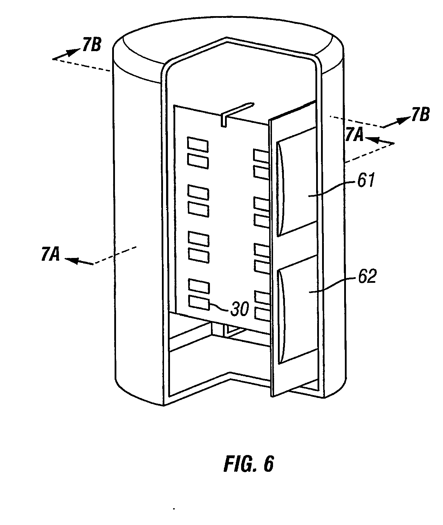

Fig. 6 is a partially cutaway perspective view of an embodiment of a direction-agile antenna in accordance with this invention, having electronic beam scanning. Unlike the systems described in connection with Figs. 1 to 4, the antenna does not need to be rotated mechanically to scan the antenna beam in all directions. In the embodiment shown in Fig. 6, the electronically steered antenna comprises four antenna surfaces or planes to cover all azimuth angles, each of the antenna surfaces having a plurality of antenna elements capable of electronically steering electromagnetic signals to a selected direction in response to the direction-selection signal generated by the antenna control unit 30. In this embodiment, the antenna elements on each surface comprise an array of microstrip radiators. In this embodiment, the circuitry of the antenna control unit 30 is integrated with one of the antenna surfaces on which the arrays of microstrip radiators are disposed. In FIG. 6, for example, four antenna planes are arranged at 90° to one another, with each of the antenna planes having two arrays of antenna elements, such as arrays 61 and 62.

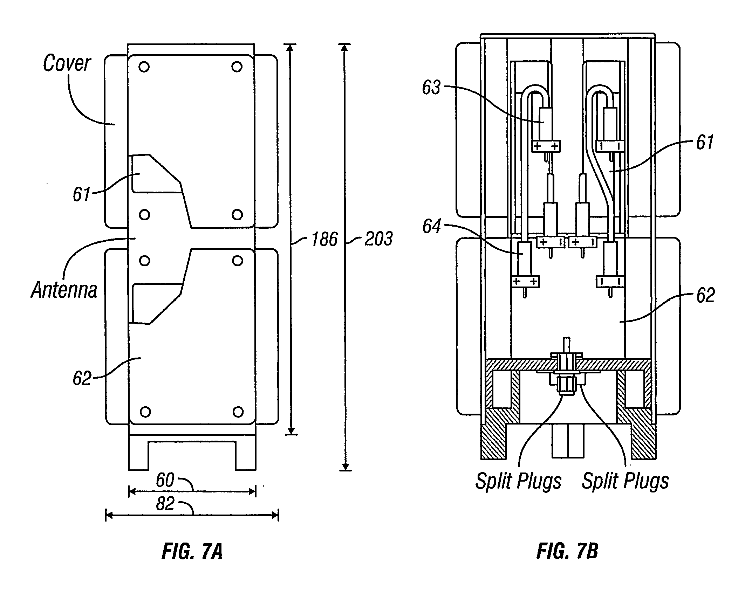

FIGS. 7A and 7B are side-sectional views of the electronically steered direction-agile antenna of FIG. 6 obtained along sectional lines 7a-7a and 7b-7b, respectively. Power delivery lines 63 and 64 are provided to supply power to the antenna arrays such as antenna arrays 61 and 62 for transmitting electromagnetic signals.

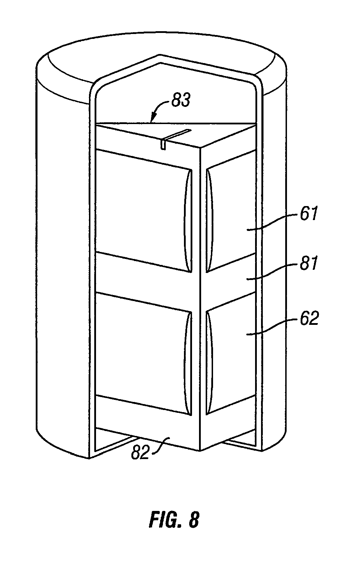

FIG. 8, shows another embodiment of a direction-agile antenna system with electronic beam steering. Three antenna surfaces 81, 82 and 83 are implemented to cover all azimuth angles. In the embodiment shown in FIG. 8, each antenna surface has two arrays of microstrip radiator elements similar to the arrangement shown in FIGS. 6, 7A and 7B and described above. In embodiments in which a direction-agile antenna with electronic beam steering is implemented, at least some of the antenna elements can be capable of being activated or switched on while other antenna elements are switched off, to allow the mobile wireless device to adjust the RF power level of transmitted electromagnetic signals.

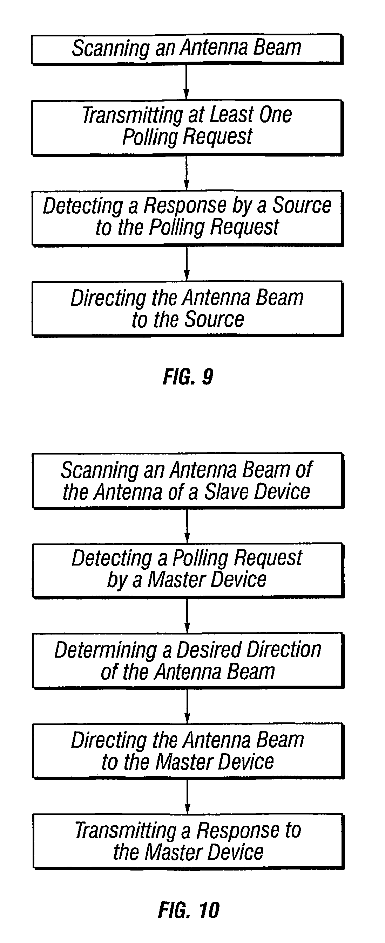

FIG. 9 is a flow chart illustrating an embodiment of a method of tracking a signal in a wireless communications network by a master communications device using a direction-agile antenna system. The method generally comprises the steps of scanning an antenna beam in multiple directions, transmitting at least one polling request during the step of scanning the antenna beam, detecting a response by a source within the wireless network to the polling request, and directing the antenna beam to the source. The source which transmits a response to the polling request is a slave device that is intended to establish a wireless data link with the master device.

When the antenna of the master device is scanning over 360° in azimuth, for example, polling requests are transmitted intermittently to seek a slave device which intends to establish a wireless data link with the master device. During the scanning of the direction-agile antenna of the master device, the transceiver of the master device awaits a response by a slave device within the network. The master device determines a desired direction of the antenna beam of the master device to the slave device by detecting a beam pattern of the RF signal carrying the response transmitted by the slave device and generating an antenna gain signal based upon the RF signal transmitted by the slave device.

The RF signal received by the master device can be demodulated into an IF signal which is then converted into a baseband signal. The baseband signal is processed by a baseband by a baseband processor to generate an antenna gain signal, which is in turn processed by the antenna control unit to generate a motor drive signal. In systems not in accordance with the present invention in which a mechanically steered antenna is implemented, the antenna is rotated by a motor to the desired direction in response to the motor drive signal. Once the antenna beam of the master device is directed toward the slave device, the rotation of the antenna stops. The position of the antenna may be memorized by the antenna control unit of the master device while the master device starts to exchange data with the slave device.

In an embodiment, fine tuning is performed by the direction-agile antenna system of the master device to maximize the gain of received RF signals as soon as the wireless data link is established between the master device and the slave device. Fine tuning of the antenna position, is accomplished by slightly changing the direction of the antenna beam and measuring the strength of received RF signals.

If the master device or the slave device is moving with respect to each other, the desired direction of the antenna beam of the master device may change over time. If the antenna control unit in the direction-agile antenna system of the master device determines that the strength of received RF signals is getting weaker, it drives the antenna to slightly different positions in an attempt to increase the strength of received RF signals. If the wireless data link is lost, the antenna beam is scanned in all directions until an RF signal from the slave device is detected to restore the wireless data link. In mobile wireless communications, the antenna beam may be scanned either continuously or in small steps in different directions to maintain the wireless data link between the master and slave devices, which may have constantly changing angular positions with respect to each other.

The aforegoing method of signal tracking in a wireless network is also applicable to embodiments in accordance with the present invention in which at least some of the wireless communication devices in the network use electronically steered direction-agile antennas instead of mechanically steered antennas for wireless data links. Instead of generating motor device signals to rotate the antenna, the direction of the antenna beam is switched by selectively applying RF power to the most properly oriented, antenna elements.

In an embodiment, the direction of the antenna beam is changed by shifting the phases of RF signals transmitted by different antenna elements in a planar array using the principle of phased array radiation known to a person skilled in the art. Before a signal from the slave device is detected by the master device, RF power is applied to the antenna arrays on all surfaces of the antenna of the master device to radiate polling requests in all directions. Once a response by a slave device is detected, one of the antenna surfaces of the master device is selected to transmit RF signals in a selected direction at a desired power level. In a further embodiment, the power level of the transmitted RF signals is adjusted by activating only some of the antenna elements in the array while switching off other antenna elements.

FIG. 10 shows a flow chart of an embodiment of a method of tracking a signal within a wireless network by a slave device. The method generally comprises the steps of scanning the antenna beam of the slave device in multiple directions, detecting a polling request by the master device, determining a desired direction of the antenna beam to the master device, directing the antenna beam to the master device, and transmitting a response to the master device. In an embodiment, the desired direction of the antenna beam of the slave device is determined by detecting a beam pattern of an RF signal carrying the polling request by the master device and generating an antenna gain signal based upon the RF signal carrying the polling request. In an embodiment, the scanning and fine tuning of the antenna beam for the slave communication device is performed in a manner similar to that of the master device in a wireless network to establish and maintain a wireless data link.

Direction-agile antennas with electronic beam scanning typically have very fast switching times, for example, on the order of about 50 ns. These antennas can be implemented in wireless devices serving as access points in a wireless local area network (WLAN), for example. Mechanically steered antennas with a rotating speed of about 120 rotations per minute, for example, can be implemented in mobile devices with relatively small dimensions. The transmission and reception of polling requests and responses to establish handshakes between master and slave communication devices in a wireless network may be performed using an industry-standard protocol according to IEEE 802.11, for example. Other types of protocols may also be used for establishing wireless data links between different wireless devices using direction-agile antenna systems within the scope of the present invention.

The present invention has been described with respect to particular embodiments thereof, and numerous modifications can be made which are within the scope of the invention as set forth in the claims.

## Claims

1. A direction-agile antenna system for communication in a wireless network, comprising:
an antenna (12) capable of transmitting an electromagnetic signal in a direction having an antenna gain; and
a controller (20) connected to the antenna (12), the controller (20) being capable of generating a direction-selection signal to steer the electromagnetic signal to a selected direction corresponding to a high gain position in response to detecting an expected signal transmitted within the network,
the antenna (12) comprising a plurality of antenna elements capable of electronically steering the electromagnetic signal to the selected direction in response to the direction-selection signal, and **characterized in that**:
the antenna elements are arranged in a plurality of arrays (61, 62) disposed on different planes.

2. A system according to claim 1, wherein the antenna elements are disposed on at least three planes to form an electronically steered radiation pattern.

3. A system according to claim 1, wherein at least some of the antenna elements are capable of being activated individually to transmit electromagnetic signals at different power levels.

4. A system according to claim 1, 2 or 3 wherein the controller comprises:
a transceiver connected to the antenna, the transceiver being capable of detecting an expected signal transmitted within the network and in response generating an antenna gain signal in response to detecting the expected signal; and
an antenna control unit connected to the transceiver, the antenna control unit being capable of generating the direction-selection signal to steer the electromagnetic signal to a selected direction corresponding to a high gain position in response to the antenna gain signal.

## Patentansprüche

1. Richtungsagiles Antennensystem für die Kommunikation in einem drahtlosen Netzwerk, das Folgendes umfasst:
eine Antenne (12), die ein elektromagnetisches Signal in einer Richtung mit einem Antennengewinn senden kann; und
eine mit der Antenne (12) verbundene Steuerung (20), die ein Richtungsauswahlsignal zum Lenken des elektromagnetischen Signals in eine gewählte Richtung entsprechend einer Hochgewinnposition als Reaktion auf die Erfassung eines in dem Netzwerk gesendeten erwarteten Signals erzeugen kann;
wobei die Antenne (12) mehrere Antennenelemente umfasst, die das elektromagnetische Signal als Reaktion auf das Richtungsauswahlsignal elektronisch in die gewählte Richtung lenken können, und
**dadurch gekennzeichnet, dass** die Antennenelemente in mehreren auf unterschiedlichen Ebenen angeordneten Feldern (61, 62) angeordnet sind.

2. System nach Anspruch 1, wobei die Antennenelemente auf wenigstens drei Ebenen angeordnet sind, um eine elektronisch gelenkte Strahlungscharakteristik zu bilden.

3. System nach Anspruch 1, wobei wenigstens einige der Antennenelemente individuell aktiviert werden können, um elektromagnetische Signale mit unterschiedlichen Leistungspegeln zu senden.

4. System nach Anspruch 1, 2 oder 3, wobei die Steuerung Folgendes umfasst:
einen mit der Antenne verbundenen Transceiver, der ein in dem Netzwerk gesendetes erwartetes Signal erfassen und daraufhin ein Antennengewinnsignal als Reaktion auf die Erfassung des erwarteten Signals erzeugen kann; und
eine mit dem Transceiver verbundene Antennensteuereinheit, die das Richtungsauswahlsignal zum Lenken des elektromagnetischen Signals in eine gewählte Richtung entsprechend einer Hochgewinnposition als Reaktion auf das Antennengewinnsignal erzeugen kann.

## Revendications

1. Système d'antenne omnidirectionnelle agile pour communiquer dans un réseau sans fil, comprenant :
une antenne (12) capable d'émettre un signal électromagnétique dans une direction ayant un gain d'antenne ; et
une unité de commande (20) connectée à l'antenne (12), l'unité de commande (20) étant capable de générer un signal de sélection de direction pour diriger le signal électromagnétique dans une direction sélectionnée correspondant à une position de gain élevé en réponse à la détection de l'émission d'un signal attendu dans le réseau,
l'antenne comprenant une pluralité d'éléments d'antenne capable de diriger électroniquement le signal électromagnétique dans la direction sélectionnée en réponse au signal de sélection de direction, et
**caractérisé en ce que** :
les éléments d'antenne sont agencés en une pluralité de réseaux (61, 62) disposés sur différents plans.

2. Système selon la revendication 1, dans lequel les éléments d'antenne sont disposés sur au moins trois plans afin de former un diagramme de rayonnement orienté électroniquement.

3. Système selon la revendication 1, dans lequel au moins certains des éléments d'antenne peuvent être activés individuellement afin d'émettre des signaux électromagnétiques à différents niveaux de puissance.

4. Système selon la revendication 1, 2 ou 3, dans lequel l'unité de commande comprend :
un émetteur-récepteur connecté à l'antenne, l'émetteur-récepteur pouvant détecter l'émission d'un signal attendu dans le réseau et en réponse générer un signal de gain d'antenne en réponse à la détection du signal attendu ; et
une unité de commande d'antenne connectée à l'émetteur-récepteur, l'unité de commande d'antenne pouvant générer le signal de sélection de direction afin de diriger le signal électromagnétique dans une direction sélectionnée correspondant à une position de gain élevé en réponse au signal de gain d'antenne.
